(19) **Europäisches Patentamt / European Patent Office / Office européen des brevets**

(11) **EP 1 461 889 B1**

(12) # EUROPEAN PATENT SPECIFICATION

(45) Date of publication and mention of the grant of the patent:
**12.11.2008 Bulletin 2008/46**

(21) Application number: **02789115.9**

(22) Date of filing: **27.11.2002**

(51) Int Cl.:
*H04L 1/18* (2006.01)

(86) International application number:
**PCT/SE2002/002186**

(87) International publication number:
**WO 2003/047155 (05.06.2003 Gazette 2003/23)**

(54) **METHOD AND SYSTEM OF RETRANSMISSION**

VERFAHREN UND SYSTEM ZUR WEITERÜBERTRAGUNG

PROCEDE ET SYSTEME DE RETRANSMISSION

(84) Designated Contracting States:
**AT BE BG CH CY CZ DE DK EE ES FI FR GB GR IE IT LI LU MC NL PT SE SK TR**

(30) Priority: **28.11.2001 SE 0104022**

(43) Date of publication of application:
**29.09.2004 Bulletin 2004/40**

(73) Proprietor: **TELEFONAKTIEBOLAGET LM ERICSSON (publ)**
**164 83 Stockholm (SE)**

(72) Inventors:
- **TORSNER, Johan**
  **FIN-02600 Espoo (FI)**
- **WIGELL, Toomas**
  **FIN-02360 Espoo (FI)**

(74) Representative: **Chamberlain, Alan James et al**
**Haseltine Lake**
**Redcliff Quay**
**120 Redcliff Street**
**Bristol BS1 6HU (GB)**

(56) References cited:
**WO-A2-99/59354**

- **ENGELS V. ET AL.: 'Radio access to an ATM network with a TDD/TDMA-OFDM system' VEHICULAR TECHNOLOGY CONFERENCE, 1997 IEEE 47TH vol. 3, 04 May 1997 - 07 May 1997, PHOENIX, AZ, USA, pages 1654 - 1658, XP000738644 & DATABASE INSPEC [Online] Database accession no. 5780602**
- **LEFEVRE F. ET AL.: 'Optimizing UMTS link layer parameters for a TCP connection' VEHICULAR TECHNOLOGY CONFERENCE, 2001. VTC 2001 SPRING. IEEE VTS 53RD vol. 4, 06 May 2001 - 09 May 2001, RHODES, GREECE, pages 2318 - 2322, XP001076172 & DATABASE INSPEC [Online] Database accession no. 7183792**
- **STEPHANE, A. ET AL.: 'Mechanisms and hierarchical topology for fast handover in wireless IP networks' IEEE COMMUNICATIONS MAGAZINE vol. 38, no. 11, November 2000, pages 112 - 115, XP000969748 & DATABASE INSPEC [Online] Database accession no. 6766392**

## Description

## TECHNICAL FIELD OF THE INVENTION

The present invention relates to transmissions and retransmissions of packet data in a communications system. Especially, it relates to transmissions of packet data in a cellular mobile radio system, particularly a Universal Mobile Telecommunications System, UMTS, or WCDMA system.

## BACKGROUND AND DESCRIPTION OF RELATED ART

Retransmission of data to or from a mobile station, MS, or user equipment, UE, is previously known. It is also known to use medium access control and radio link control layers of a UMTS protocol structure in acknowledged mode for dedicated channels.

In acknowledged mode of UMTS, retransmissions are undertaken in case of detected transmission errors not recovered by forward error control. This is also called automatic repeat request, ARQ. With ARQ, retransmissions can be undertaken unless a transmitted message is (positively) acknowledged within a predetermined time frame, or if it is negatively acknowledged.

Within this patent application, a radio network controller, RNC, is understood as a network element including a radio resource controller. The RNC is connected to a fixed network. Node B is a logical node responsible for radio transmission/reception in one or more cells to/from a User Equipment. A base station, BS, is a physical entity representing Node B.

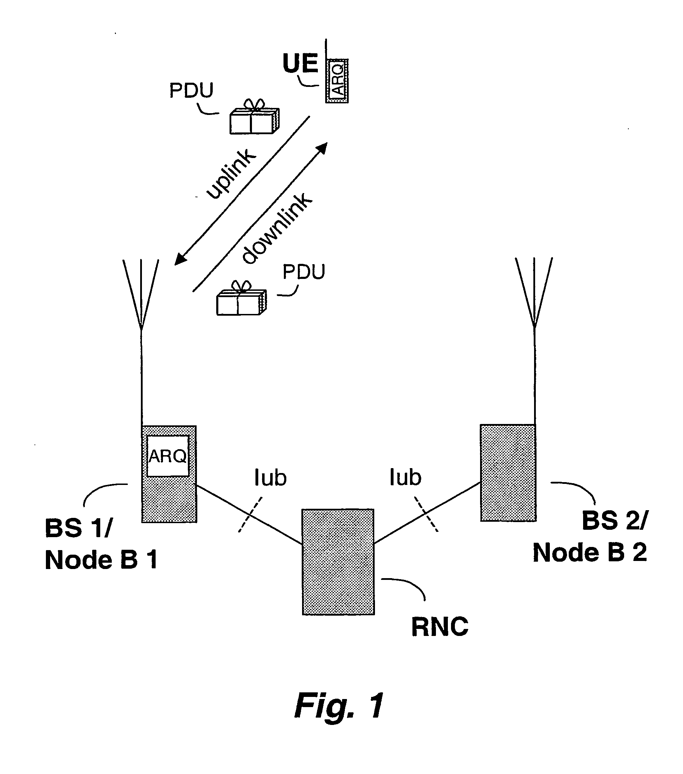

With reference to figure 1, base stations «BS 1» and «BS 2» are physical entities representing Nodes B «Node B 1» and «Node B 2» respectively. «Node B 1» and «Node B 2» terminate the air interface, called Uu interface within UMTS, between UE and respective Node B towards the radio network controller «RNC». A radio network controller «RNC» controlling the respective Nodes B «Node B 1», «Node B 2» is connected to each of them over an Iub interface.

Medium access control, MAC, and radio link control, RLC, are used within radio communications systems like General Packet Radio Services, GPRS, and UMTS.

*U.S. Patent* US5570367 discloses a wireless communications system arranged to transmit acknowledgement and request for retransmission messages. Data received in a microcell from an end user device is forwarded to a cell site. Data received by the cell site is transmitted to a cellular switch. A base station sends a poll message to the end user device, inquiring for the status of unacknowledged messages previously transmitted from the base station.

Also, a base station transmitter window is defined. A lower end pointer identifies a lowest numbered packet transmitted to and acknowledged by the base station. The upper end pointer identifies the highest numbered packet transmitted by the base station. Consequently, the window represents packets transmitted by the base station and unacknowledged by the end user device.

*U.S. Patent* US6118765 also recognizes an acknowledge scheme of a discriminator using a sliding window. The discriminator passes valid packets for forwarding.

*International Patent Application* WO0021231 relates to a system for communicating data packets over a packet switched network where a buffering network entity acts as end-receiver of data packets transmitted from a sending host.

3rd Generation Partnership Project (3GPP): *Technical Specification Group Radio Access Network, Physical Layer Procedures, 3G TS 25.301 v3.6.0, France, September 2000,* specifies in chapter 5 Radio Interface Protocol Architecture of a UMTS system. There are three protocol layers:

- physical layer, layer 1 or L1,

- data link layer, layer 2 or L2, and

- network layer, layer 3 or L3.

Layer 2, L2, and layer 3, L3, are divided into Control and User Planes. Layer 2 consists of two sub-layers, RLC and MAC, for the Control Plane and four sub-layers, BMC, PDCP, RLC and MAC, for the User Plane. The acronyms BMC, PDCP, RLC and MAC denote Broadcast/Multicast Control, Packet Data Convergence Protocol, Radio Link Control and Medium Access Control respectively.

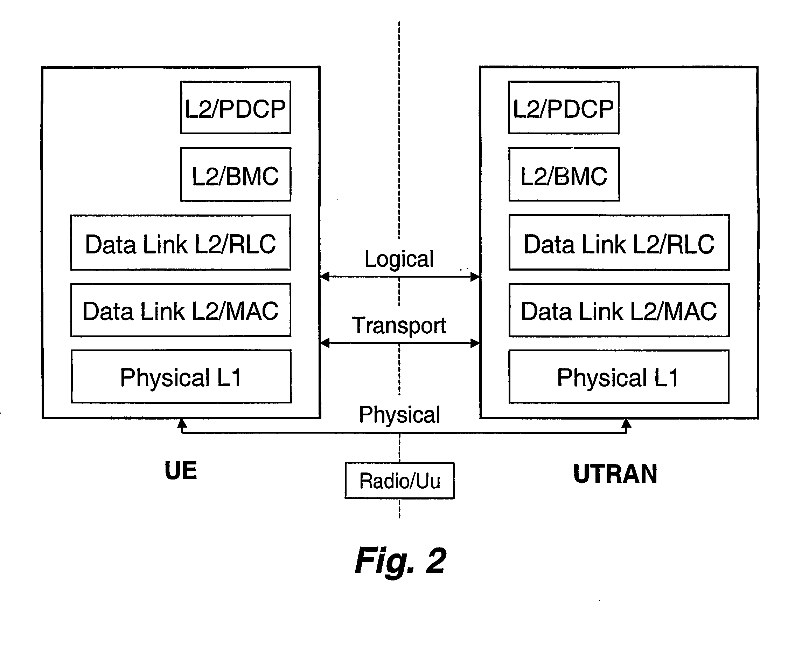

Figure 2 illustrates a simplified UMTS layers 1 and 2 protocol structure for a Uu Stratum, UuS, or Radio Stratum, between a user equipment UE and a Universal Terrestrial Radio Access Network, UTRAN.

Radio Access Bearers, RABs, are associated with the application for transportation of services between core network, CN, and user equipment, UE, through a radio access network. Each RAB is associated with quality attributes such as service class, guaranteed bit rate, transfer delay, residual BER, and traffic handling priority. An RAB may be assigned one or more Radio Bearers, RBs, being responsible for the transportation between UTRAN and UE. For each mobile station there may be one or several RBs representing a radio link comprising one or more channels between UE and UTRAN. Data flows (in the form of segments) of the RBs are passed to respective Radio Link Control, RLC, entities which amongst other tasks buffer the received data segments. There is one RLC entity for each RB. In the RLC layer, RBs are mapped onto respective logical channels. A Medium Access Control, MAC, entity receives data transmitted in the logical channels and further maps logical channels onto a set of transport channels. In accordance with subsection 5.3.1.2 of the 3GPP technical specification MAC should support service multiplexing e.g. for RLC services to be mapped on the same transport channel. In this case identification of multiplexing is contained in the MAC protocol control information.

Transport channels are finally mapped to a single physical channel which has a total bandwidth allocated to it by the network. In frequency division duplex mode, a physical channel is defined by code, frequency and, in the uplink, relative phase (I/Q). In time division duplex mode a physical channel is defined by code, frequency, and timeslot. As further described in subsection 5.2.2 of the 3GPP technical specification the L1 layer is responsible for error detection on transport channels and indication to higher layer, FEC encoding/decoding and interleaving/deinterleaving of transport channels.

PDCP provides mapping between Network PDUs (Protocol Data Units) of a network protocol, e.g. the Internet protocol, to an RLC entity. PDCP compresses and decompresses redundant Network PDU control information (header compression and decompression).

For transmissions on point-to-multipoint logical channels, BMC stores at UTRAN-side Broadcast Messages received from an RNC, calculates the required transmission rate and requests for the appropriate channel resources. It receives scheduling information from the RNC, and generates schedule messages. For transmission the messages are mapped on a point-to-multipoint logical channel. At the UE side, BMC evaluates the schedule messages and deliver Broadcast Messages to upper layer in the UE.

3G TS 25.301 also describes protocol termination, i.e. in which node of the UTRAN the radio interface protocols are terminated, or equivalently, where within UTRAN the respective protocol services are accessible.

In UMTS, the RLC protocol is terminated in a serving RNC, SRNC, responsible for interconnecting the radio access network of UMTS to a core network. In relation to a Node B, an RNC controlling it is a Controlling RNC. The Serving RNC and Controlling RNC can be separate or co-incident. In case of separate RNCs they communicate over an Iur interface, otherwise they communicate locally. An RNC comprises an RLC entity including an L2/RLC protocol layer «L2/RLC» at UTRAN side in figure 2. There are two MAC-entities, MAC-d and MAC-c/-sh, routing dedicated channels over common or shared channels. MAC-d resides in the Serving RNC and MAC-c/-sh in the Controlling RNC. The routing comprises buffering of data in the MAC-entities MAC-d and MAC-c/-sh, to accommodate for the unsynchronized data flows into and out of MAC-d and MAC-c/-sh. The two MAC-entities MAC-d and MAC-c/-sh are responsible for the L2/MAC protocol layer functionality at UTRAN side according to figure 2.

3rd Generation Partnership Project (3GPP): *Technical Specification Group Radio Access Network, RLC Protocol Specification, 3GPP TS 25.322 v3.5.0, France, December 2000,* specifies the RLC protocol. The RLC layer provides three services to higher layers:

- transparent data transfer service,

- unacknowledged data transfer service, and

- acknowledged data transfer service.

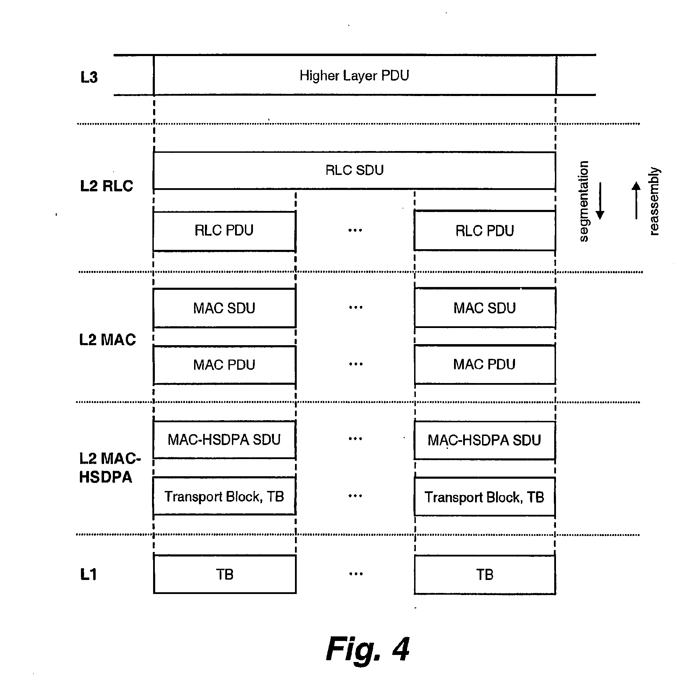

In subsection 4.2.1.3 an acknowledged mode entity, AM-entity, is described (see figure 4.4 of the 3GPP Technical Specification). In acknowledged mode automatic repeat request, ARQ, is used. The RLC sub-layer provides ARQ functionality closely coupled with the radio transmission technique used. The 3GPP technical specification also reveals various triggers for a status report to be transmitted. The receiver shall always send a status report, if it receives a polling request. There are also three status report triggers, which can be configured

1. Missing PU(s) Detected,

2. Timer Initiated Status Report, and

3. Estimated PDU Counter.

For trigger 1, the receiver shall trigger transmission of a status report to the sender if a payload unit, PU, is detected to be missing. (One PU is included in one RLC PDU.) With trigger 2, a receiver triggers transmission of a status report periodically according to a timer. Finally, trigger 3 relates in short to a timer corresponding to an estimated number of received PUs before the requested PUs are received. The 3GPP Technical Specification specifies a status PDU used to report the status between two RLC AM ('Acknowledged Mode') entities.

3GPP TS 25.322 specifies RLC state variables at the transmitter and at the receiver. At the transmitter side some of these are
VT(S) Send state variable,
VT(A) Acknowledge state variable,
VT(MS) Maximum Send state variable, and
VT (WS) Transmitter window size state variable.

VT(S) is the sequence number of the next PU to be transmitted for the first time (i.e. excluding retransmission). VT(A) is the sequence number of the next in-sequence PU expected to be acknowledged, which forms the lower edge of the window of acceptable acknowledgements. VT(MS) is the sequence number of the first PU not allowed by the receiver [i.e. the receiver will allow up to VT(MS) - 1]. This value represents the upper edge of the transmit window. VT(WS) is the size that shall be used for the transmitter window. Consequently, VT(WS) relates to VT(A) and VT(MS) according to

$$VT(WS) = VT(MS) - VT(A).$$

One of the state variables at the receiver side is VR(R) Receive state variable.

VR(R) is the sequence number of the next in-sequence PU expected to be received. It is set equal to SNmax+1 upon receipt of the next in-sequence PU, where SNmax is the sequence number of the highest received in-sequence PU.

"Radio Access to an ATM Network with a TDD/TDMA-OFDM System", Vehicular Technology Conference, 1997 IEEE 47th, Vol.3 , pages 1654-1658, describes an Orthogonal Frequency Division Multiplexing (OFDM) transmission system for the radio access to an ATM network. In particular, a time division duplex (TDD) frame structure is analyzed considering different division multiplex access (DMA) techniques. The uplink uses TDMA, while the downlink uses TDMA and FDMA. A non-collision medium access control (MAC) protocol, a radio automatic repeat request (ARQ) and a handover protocol are presented.

None of the cited documents above discloses a method and system of transmissions and retransmissions of packet data, splitting a connection involving multiple ARQ loops and transferring transmitter state variables between the loops.

## SUMMARY OF THE INVENTION

In a radio communications system operating in acknowledged mode, according to prior art, data is buffered in a Radio Network Controller. ARQ loops introduces delay and round-trip time latency. I.e., the time for an application to perceive a response to transmitted data or undertaken action from the opposite end is not immediate. ARQ loops will also require buffering.

Higher layer applications can be, e.g., applications on the Internet. Most applications on the Internet use protocols, such as TCP (Transport Control Protocol), that control the transmission rate, based on link quality in terms of packet loss and delay characteristics. Consequently, besides the negative effect of retransmission delays as such on perceived quality, substantial queuing delay can also lead to secondary effects further reducing quality of service.

A proper introduction of a hybrid ARQ protocol in Node B, according to the invention, would render at least some of the required acknowledgements of prior art superfluous and improve system performance. Elimination of an existing ARQ loop raises requirements on proper handling of acknowledgements and status reports, between nodes involved, particularly in connection with handover involving more than one Node B.

Consequently, it is an object of this invention to eliminate or reduce delay and latency as perceived by a user.

A related object is to reduce delay and latency as perceived by a flow control algorithm in a WCDMA (Wideband Code Division Multiple Access) system.

A further object is to provide a method and system for providing an ARQ loop with handover status information from another ARQ loop.

Finally, it is an object to fast and efficiently provide a Node B with queuing data for in-sequence delivery of RLC PDUs to a user equipment at handover.

These objects are met by the invention, which is particularly well suited for a Universal Mobile Telecommunications System, UMTS, splitting an ARQ loop into two or more single loops and taking appropriate measures, explained in detail below, for queue updating at handover.

Preferred embodiments of the invention, by way of examples, are described with reference to the accompanying drawings below.

## BRIEF DESCRIPTION OF THE DRAWINGS

Figure 1 shows communication, according to the invention, between a UE and a base station involved in a connection between an RNC and the UE.

Figure 2 displays a layered protocol structure, according to prior art, in a radio communications system.

Figure 3 shows a preferred layered protocol structure, a protocol stack, according to the invention.

Figure 4 shows data units and transport blocks of a preferred protocol stack, according to the invention.

Figure 5 schematically illustrate status report generation and transmissions, according to the invention.

Figure 6 illustrates a communications system with ARQ functionality located to RNC, according to the invention.

Figure 7 illustrates an alternative exemplary communications system with ARQ functionality located to RNC, according to the invention.

Figure 8 schematically illustrates a flowchart of a first embodiment according to the invention.

Figure 9 schematically depicts a flowchart of a second embodiment according to the invention.

Figure 10 shows a block diagram including elements of the first and second embodiments.

## DESCRIPTION OF PREFERRED EMBODIMENTS

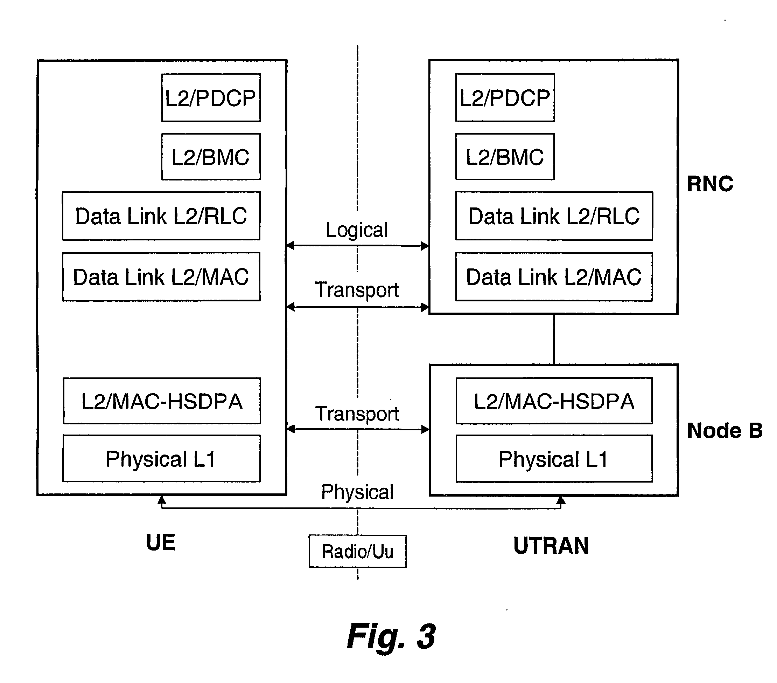

Figure 3 shows a preferred layered protocol structure, a protocol stack, according to the invention. The L2 MAC layer of figure 1 has been extended and divided into two sub-layers, an L2 MAC sub-layer and a MAC-HSDPA sub-layer. Essentially the L2 MAC sub-layer corresponds to the prior art L2 MAC sub-layer of figure 1. The MAC-HSDPA plus the MAC layer could be regarded as one single MAC layer extended to also include hybrid ARQ functionality. However, for reasons of explanation they are preferably regarded as separate sub-layers. Further, on the network side, considering them as separate protocol sub-layers physically better corresponds to the physical entities where they reside. As illustrated in figure 3 on the UTRAN-side (or network side) L2 MAC sub-layer is preferably located in RNC, whereas L2 MAC-HSDPA sub-layer is located in Node B. As the hybrid ARQ protocol combines successively received retransmissions it is a great advantage to have this protocol close to the physical layer and, particularly, in Node B. Among the advantages achieved thereby, e.g., the round-trip delay is reduced as compared to a location in RNC. Within this patent application the protocol layers, except for L2 MAC and L2 MAC-HSDPA as just explained, correspond to those of figure 1.

Figure 4 shows data units and transport blocks of a preferred protocol stack, according to the invention. Packet switched data is transmitted in protocol data units, PDUs, in both directions. Each PDU is transported on a transport channel in at least one transport block, TB. Preferably there is one TB for each PDU. As described above, transmission errors on the transport channel are corrected and detected by layer L1. Each transport block, TB, can be provided an individual CRC error-detecting checksum prior to transmission on the physical channel. However, preferably a transmission unit, carrying one or more TBs, is provided only one CRC error-detecting checksum. If a transmission unit is detected to be in error on the receiving side, this is reported to the L2 MAC layer.

L2 MAC layer can request retransmission of transmission units received in error. Transmission units, detected to be in error, still carry information that should not be wasted. Preferably hybrid ARQ, utilizing information available from earlier transmission(s) of a transmission unit by proper combining with the latest retransmission, is used prior to an L2 MAC layer request for retransmission.

At the receiving end, error detection is also performed by layer L2 RLC. If an RLC protocol data unit, PDU, is received in error or the PDU is missing, it will be requested for retransmission at a point in time when a status report is established by the RLC layer. RLC PDUs are transferred to/from the MAC layer SDUs. The MAC SDU possibly includes a header not included in the RLC PDU. As explained in relation to figure 3, according to the invention there are preferably two MAC sub-layers, an L2 MAC sub-layer and an L2 MAC-HSDPA sub-layer. In a preferred embodiment of the invention, the L2 MAC sub-layer is located in RNC and the L2 MAC-HSDPA sub-layer is located in Node B. As previously described, the RLC PDUs are transferred in transport blocks, TBs, on the physical channel. The L2 MAC-HSDPA layer transfers TBs to the L1 physical layer. In the reverse direction the L2 MAC-HSDPA layer transfers TBs, possibly after combining of multiple transmissions of the respective TBs, indicated to be error-free to the L2 MAC layer. TBs not indicated to be error-free are requested for retransmission.

A network layer PDU or L3 PDU can comprise several RLC PDUs. RLC PDUs are reassembled into RLC service data units, RLC SDUs, prior to delivery to higher layer PDU. The L3 protocol can be, e.g., the Internet Protocol, IP. Upon reception from L3, RLC SDUs are segmented into RLC PDUs.

In an evolved WCDMA system, a high-speed downlink packet access channel, HSDPA channel, is a channel with similarities to a DSCH. However, it is based on a novel transport channel type. In the sequel, this is referred to as a High-Speed Downlink Shared CHannel, HS-DSCH. An HS-DSCH supports many features not supported by DSCH, but also inherits some of the characteristics of a DSCH. There are several important features of an HS-DSCH. A sample of features is:

- High data rates with peak data rates up to tens of Mbit/s.

- Data is transmitted to multiple users on a shared channel by means of time-division multiplex, TDM, or code-division multiplex, CDM.

- Higher-order modulation.

- Modulation adaptive to radio channel conditions.

- Fast retransmission with soft combining of retransmitted data at UE, also referred to as Fast Hybrid ARQ or Fast HARQ.

- Low air-interface delay, with maximum round-trip delay down to some ten milliseconds.

As an alternative to introducing the MAC-HSDPA sub-layer in Node B, the RLC protocol could reside in Node B. However, for reasons of compatibility RLC is in charge of ciphering and in-order delivery, preferably located in RNC. With RLC sub-layer residing in RNC, reliable packet delivery will be insured between Node B and RNC.

According to preferred embodiments of the invention, an L2 MAC-HSDPA sub-layer is responsible for Fast Hybrid ARQ.

One reason for terminating the Fast Hybrid ARQ in Node B is the reduction of round-trip delay as compared to terminating it in RNC. Another reason is that Node B is capable of using soft combining of multiply transmitted data packets, whereas RNC generally only receives hard-quantized bits.

L2 RLC sub-layer requires status reports acknowledging packet data units previously transferred from the L2 RLC layer, e.g. to advance the sliding transmitter window of the L2 RLC protocol. When, e.g., a poll timer times out it consequently transfers an inquiry for a status report. This inquiry is destined for the UE, in accordance with prior art. However, such an inquiry would load the scarce resource of the radio interface between Node B and UE. Further, terminating the Fast Hybrid ARQ in Node B, during stable operating conditions this node will be currently informed of the receive status of the UE in accordance with the Fast Hybrid ARQ scheme, possibly with a short delay for the most recent update of UE.

According to a preferred embodiment of the invention the Hybrid ARQ protocol entity at UTRAN-side generates status reports to the RNC-RLC. Status reports can be generated either upon request of the RNC-RLC (polling) or as conditionally triggered locally. In case of the latter, the triggers described in prior art and referred to on page 6 apply. Another trigger to be included is the number of PDUs received by Node B from RNC. When a predefined number of PDUs have been received by Node B, a status report is established in the Hybrid ARQ protocol entity, and transmitted to RNC.

Correspondingly, when Node B deals with status report establishment, the status report triggering in the UE can be relieved, in order not to load the scarce communication link resource between Node B and UE. With reference to trigger 1 on page 6, the triggering of UE can be avoided if Node B detects the missing PU in due time for delivery to UE prior to a point in time when it would otherwise have been detected or otherwise initiated establishment and transmission of a status report from UE. Triggers 2 and 3 depend on a preset time interval or number of PDUs. By extending the parameters appropriately, the number of status reports per unit time initiated in UE by these triggers can be reduced to a sufficiently small number, not loading the scarce communication link resource between UE and Node B more than necessary.

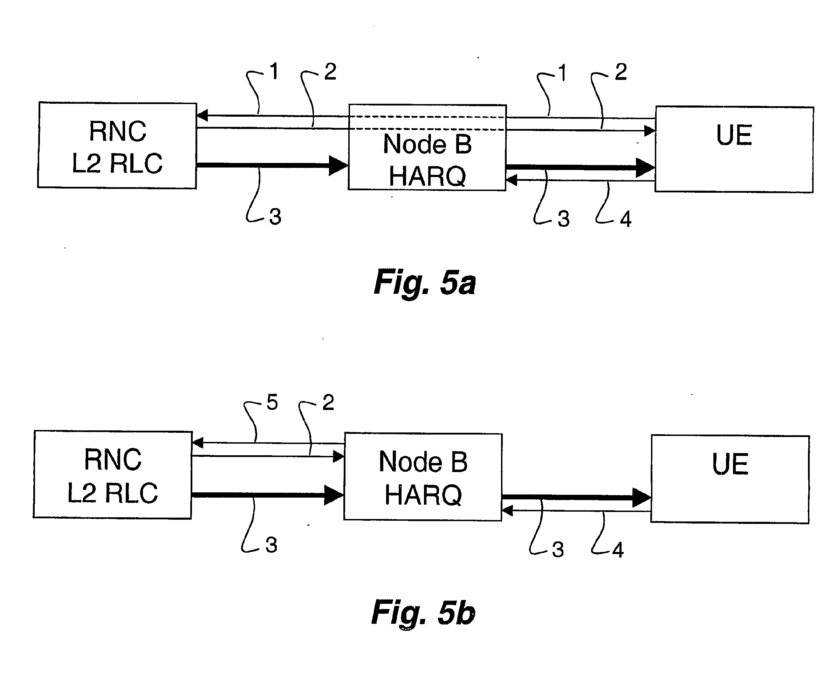

Figures 5a and 5b schematically illustrate the status report generation and transmissions, according to the invention. In figure 5a, L2 RLC located in RNC transfers data to UE via Node B, as already described in relation to figure 2. Downlink data 3 and requests for status reports 2 are transferred 2, 3 to UE via Node B. UE can also generate status reports when properly triggered locally. Status reports 1 are transmitted from UE to RNC, as described in relation to cited prior art.

In figure 5a, the Hybrid ARQ protocol resides in Node B. Downlink data is transmitted 3 over the radio interface between Node B and UE. Depending on whether the data transmission was successful or not, acknowledgements are transmitted 4 to Node B from UE. Status reports are generated in UE if data packets are missing, or detected to be out of sequence and transmitted 1, 4 to Node B. Status reports can also be transmitted 4 from UE upon request from Node B. In the sequel acknowledgements and status reports, and possibly other signaling related to Fast Hybrid ARQ, from UE to Node B are collectively referred to as HARQ signaling 4. Consequently, Node B has a good picture of the UE status as regards data packets transmitted to UE from RNC via Node B. This status includes

BVT(S) Node B Send state variable, and
BVT(A) Node B Acknowledge state variable.

BVT(S) is the sequence number of the next PU to be transmitted for the first time (i.e. excluding retransmission) from Node B. BVT(A) is the sequence number of the next in-sequence PU expected to be acknowledged by UE. BVT(A) forms the lower edge of the window of acceptable acknowledgements.

Figure 5b shows a preferred solution according to the invention, where UE status in accordance with transmitted downlink data 3 and HARQ signaling 4 is stored in the HARQ protocol entity, preferably a MAC-HSDPA protocol.

When UE might locally generate status reports according to one or more predefined triggers, the one or more status reports are transferred 4 to Node B. Upon reception in Node B, this Node decides whether or not a received status report concerns also L2 RLC protocol layer. If so, the status report, possibly edited by Node B, is transferred 5 to L2 RLC residing in RNC. If not, Node B will undertake all actions necessary, in accordance with the status report.

An example of a UE-generated status report concerning the L2 RLC protocol of RNC is when UE-HARQ protocol, preferably in the MAC-HSDPA protocol link layer, detects a failure in UE, possibly due to a previously transmitted acknowledgment received in error by Node B. Upon detection of this failure, an RLC PDU will not be transferred from L2 MAC sub-layer to L2 RLC sublayer of UE, as only presumably correct PDUs are transferred. When L2 RLC sub-layer of UE detects a missing RLC PDU, the sequence number of the missing RLC PDU will be included in a status report, generated by UE, and requested for retransmission from L2 RLC residing in RNC. Swedish patent application No. 0100739-2 assigned to the Applicant describes a method and system of retransmission, reducing or eliminating unnecessary retransmissions. This method and system can also be applied with the present invention, further reducing the load on the radio interface.

When L2 RLC, residing in RNC, sends a request for status report to UE, the request is first received in Node B, in both figures 5a and 5b. In figure 5a, the request for status report is forwarded 2 to UE by default. Consequently, the requests and their responses load the radio interface between Node B and UE. Between Node B and UE, signaling and packet transfer are indicated by double arrows, 1 and 4 for uplink, and 2 and 3 for downlink, due to their logical differences. However, there is only one physical radio spectrum available with a limited channel capacity in each direction. Therefore, when the HARQ protocol entity or Node B is made responsible for status report generation and replies to L2 RLC requests for status reports, as in figure 5b, the load on the radio interface can be relieved. Hence, the elimination of arrows 1 and 2 between Node B and UE in figure 5b is not absolute. Depending on triggers selected, potential protocol failure etc. some signaling or packet transfer illustrated by the arrows in figure 5a may remain. However, the lack of these arrows in figure 5b illustrates that a substantial amount of the load can be eliminated according to the invention. In the foregoing, it was explained for various status report triggers, not limiting the invention only to this or other particular examples, how the invention can reduce the load of a scarce communication link resource in downlink, in uplink, or both.

There is a sender-receiver relationship between «RNC» and «UE», in accordance with prior art. Packets transmitted from RLC protocol entity residing in RNC are acknowledged by User Equipment «UE». The sender-receiver relationship is subject to latency due to a round-trip delay between «RNC» and «UE», not illustrated to simplify reading.

A first problem of prior art solution relates to bandwidth delay product. HS-DSCH provide high data rate, also referred to as great user bandwidth. A transmitted packet cannot be acknowledged (positively or negatively) until it has propagated to a receiver. Further, it takes a propagation time for an acknowledgement to reach from the receiver to a sender of the packet. Consequently, data that may be requested for retransmission require buffering corresponding to the bandwidth delay product, representing the amount of data that can be transmitted during a time span equivalent to the round-trip time latency. Particularly, for HS-DSCH this bandwidth delay product can be extensive for an ARQ protocol entity in RNC. This can cause RLC PDU loss, or RLC ARQ or HARQ transmissions to stall.

Of course, these shortcomings could be circumvented by increasing buffer size as only measure. However, increasing a buffer size allowing for an extended round-trip time, would necessitate time-out timers of outer ARQ loops to be increased. Further, an extended variability of buffer lengths of the inner loop could be expected, depending on the various rates and delays of a connection during its lifetime. If relying on increased buffer size only, the time-out timers of outer ARQ loops must not time out until the largest round-trip time allowed for has elapsed.

In UMTS, existing RLC protocol operates with limited buffer sizes. One reason for this is delay constraints.

The problem of prior art, as explained above, cannot be solved by increasing RLC buffer size, as long as the RLC buffer is part of an end-to-end-delay of a connection between a data provider and an end user, where the data provider awaits acknowledgements from the user, since increasing RLC buffer size would introduce additional delay and require extensive time-out limits.

As a user moves with his user equipment away from a base station «BS 1» towards another base station «BS 2» in figure 1, the connection between UE and RNC is likely to be rerouted from being over a first Node B «Node B 1» to being over a second Node B «Node B 2» or over both «Node B 1» and «Node B 2» using soft handover. In figure 1, the base stations are connected to the same radio network controller RNC. However, the invention also covers the exemplary situation where the base stations are connected to different RNCs.

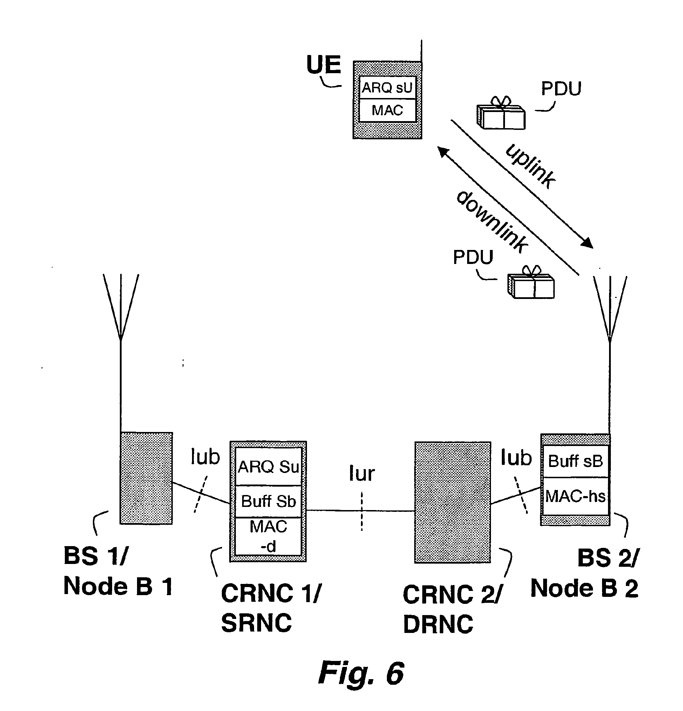

Figure 6 illustrates an exemplary communications system with ARQ functionality located to RNC. The UE protocol «MAC» preferably also includes a MAC-HSDPA protocol, not indicated to simplify reading. In UTRAN, location of MAC-HSDPA protocol «MAC-hs» to Node B is preferred, as explained in relation to figure 3. Serving RNC «SRNC» interconnects UE to a Core Network, not illustrated. «UE» is connected to «SRNC» over «Node B 2» and «CRNC 2/DRNC». According to figure 6, «SRNC» is not controlling the Node B «Node B 2». (For illustration, «SRNC» controls «Node B 1».) «Node B 2» is controlled by Controlling RNC «CRNC 2», acting as a Drift RNC «DRNC» in this exemplary illustration. The Drift RNC supports the Serving RNC when a UE needs to use cells/Nodes B controlled by an RNC different from the SRNC. The RNCs are interconnected over an Iur interface. Routing of dedicated channels over common or shared channels comprises buffering of data in Serving RNC and Node B. In figure 6, the buffering occurs in buffers «Buffer Sb» and «Buffer sB» for the sender-receiver relationship between SRNC and Node B. The latency of the loop involving the buffers «Buffer Sb» and «Buffer sB» will be substantial if the distance between Serving RNC and Node B is large. In figure 6, there is further buffering «ARQ Su» in «SRNC» associated with the ARQ-protocol in the sender-receiver relationship between «SRNC» and «UE». «UE» includes corresponding ARQ buffering «ARQ Su».

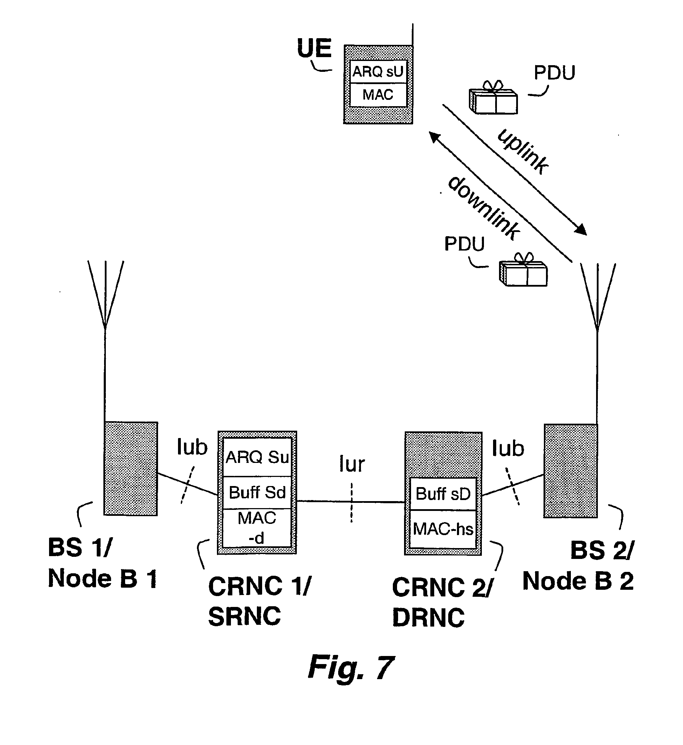

Figure 7 illustrates an alternative exemplary communications system with ARQ functionality located to RNC. The figure represents alternatives for the MAC-protocol in RNC, including MAC-HSDPA protocol. However, location of MAC-HSDPA protocol «MAC-hs» to Node B is preferred. The UE protocol «MAC» preferably also includes a MAC-HSDPA protocol, not explicitly indicated in the figure to simplify reading. Serving RNC «SRNC» interconnects UE to a Core Network, not illustrated. «UE» is connected to «SRNC» over «Node B 2» and «CRNC 2/DRNC». According to figure 7 «SRNC» is not controlling the Node B «Node B 2». (For illustration, «SRNC» controls «Node B 1».) «Node B 2» is controlled by Controlling RNC «CRNC 2», acting as a Drift RNC «DRNC» in this exemplary illustration. The Drift RNC supports the Serving RNC when a UE needs to use cells/Nodes B controlled by an RNC different from the SRNC. The RNCs are interconnected over an Iur interface. Routing of dedicated channels over common or shared channels comprises buffering of data between Serving RNC and Controlling RNC. In figure 7, the buffering occurs in buffers «Buffer Sd» and «Buffer sD» for the sender-receiver relationship between SRNC and DRNC. The latency of the loop involving the buffers «Buffer Sd» and «Buffer sD» will be substantial if the distance between Serving RNC and Controlling RNC is large. In figure 7, there is further buffering «ARQ Su» in «SRNC» associated with the ARQ-protocol in the sender-receiver relationship between «SRNC» and «UE». «UE» includes corresponding ARQ buffering «ARQ Su».

Terminating RLC AM ARQ in Node B benefits from a round-trip time being constant for a particular Node B. This will simplify setting of time-out timers, reducing the round-trip time variability of RLC AM ARQ and outer ARQ loops. The inner HARQ loop RTT is kept at a low level using soft combining of successive retransmissions and due to shorter delay times between Node B and UE than between RNC and UE. The RLC entity in Node B should send an appropriate RLC status message to the Serving RNC when it discovers a missing RLC PDU or when a Poll flag, indicating that a status report is requested, is set by RNC RLC. This poll flag should be cleared prior to passing RLC PDUs further to HARQ transmitter unit to avoid triggering of status report transmissions from UE RLC.

Channels can be switched for several reasons. One example of channel switching is handover from one base station to another as a user moves. Another reason can be some channels being subject to heavy interference whereas others are not. By use of different channelization codes in WCDMA, users are allocated channels of different data rates. Other wireless systems, such as W-LANs (Wireless Local Area Networks) generally do not provide for handover from one base station to another including channel switching even if they allow for quasi-stationary connections to different base stations of the systems.

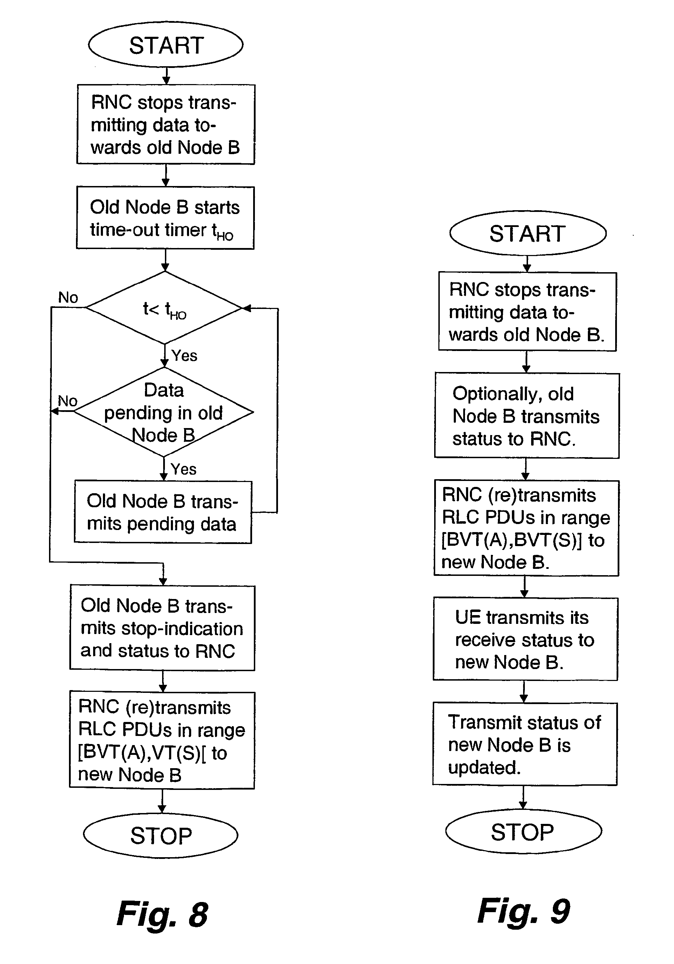

According to a first embodiment of the invention, schematically illustrated in figure 8, RLC Acknowledged Mode ARQ, RLC AM ARQ, is at least partly terminated in Node B and RLC state variables transferred and updated at handover and channel switching. RLC AM ARQ also retransmits data packets to Node B at data packet losses in Iub or Iur interface. At an HSDPA handover from an old Node B to a new Node B, the serving RNC stops data transmissions to the old Node B. The old Node B finishes its pending data transmissions during a predefined maximum time-period. When pending data has been transmitted or if the maximum time-period has elapsed, it transmits a stop-indication to the serving RNC. The stop-indication is accompanied by a latest Node B status of old Node B, including the next in-sequence PU expected to be acknowledged by UE, referred to as BVT(A).

When the serving RNC receives this indication it marks all its RLC PDUs within a frame of PU sequence numbers ranging from BVT(A) to VT(S) as negatively acknowledged, and scheduling these RLC PDUs for retransmission to the new Node B, via the RNC controlling new Node B.

Substituting controlling RNC for Node B, figure 8 is also valid for an implementation with MAC-HSDPA in controlling RNC, as in figure 7. The serving RNC then schedules data packets, interpreted as negatively acknowledged RLC PDUs, for retransmission to new controlling RNC at an inter-RNC handover.

According to a second embodiment schematically depicted in figure 9, at HSDPA handover data queues of new Node B are updated from UE, i.e. over Uu interface. Preferably, the entire transmitter window of PU sequence numbers ranging from BVT(A) to BVT(S) of old Node B is transferred to new Node B, where BVT(S) denotes the sequence number of the next PU scheduled for transmission for the first time from old Node B. This transmitter window is transmitted as soon as possible, without RNC awaiting a stop-indication from old Node B. As Node B regularly transfers status reports to RNC RLC, the transmitter window from the latest update may already be available to RNC and can be transferred to new Node B without further status transfer between Node B and RNC.

As soon as UE receives a handover command, it includes additional control information to its uplink HS-DSCH control messages. This control information includes the receive state variable VR(R). If UE has multiple logical channels on the HS-DSCH, there is one receive state variable for each logical channel.

New Node B will receive this control information from UE, while still being in stand-by mode. The one or more receive state variables are used for updating the transmitter window of new Node B, the transmitter initially set in accordance with old Node B transmitter window. This updating has to be completed prior to new Node B starting its transmissions of PDUs and transport blocks to UE, to maintain in-sequence delivery of RLC PDUs to UE.

Also figure 9 is valid for an implementation with MAC-HSDPA in controlling RNC, substituting controlling RNC for Node B. The serving RNC then schedules RLC PDUs interpreted as negatively acknowledged for retransmission to new controlling RNC for an inter-RNC handover and UE updates status of controlling RNC via Node B.

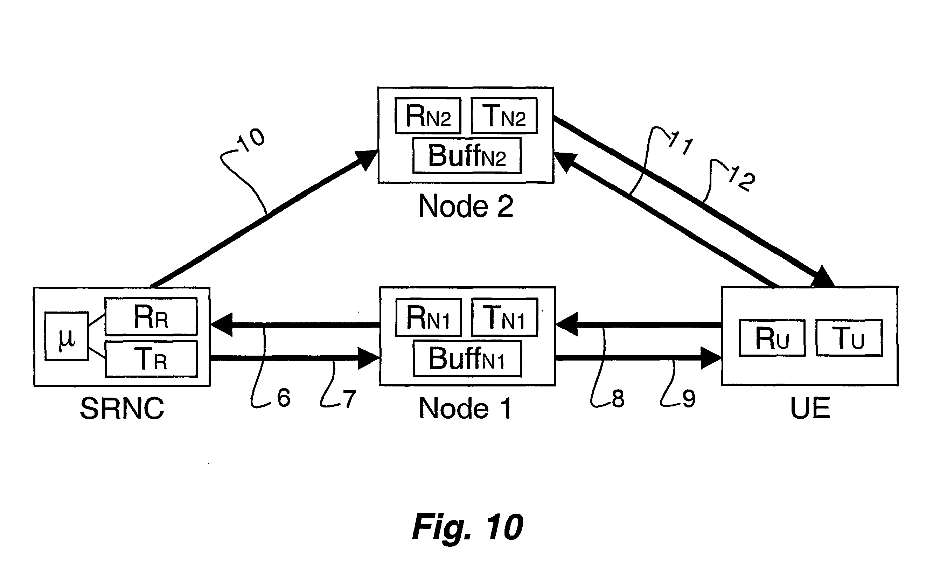

Figure 10 shows a block diagram including elements of the first and second embodiments. A serving RNC «SRNC» including receive means «RR», processing means «μ» and transmit means «TR». Transmit means «TR» transmits data 7 from a transmitter window comprising data packets with sequence numbers in the range of VT(A) to VT(S) to a node «Node 1» comprising a MAC-HSDPA protocol, preferably «Node 1» is a Node B, but it can also be a controlling RNC. Data packets received by receive means «RN1» in «Node 1», also comprising transmit means «TN1», are buffered in buffer «BuffN1» for transmission 9 to user equipment «UE» including receive means «RU». At handover from a channel associated with «Node 1» to a channel associated with «Node 2», «Node 1» transmits as much of its buffer content in «BuffN1» as allowed to user equipment «UE». «Node 1» with receive means «RN1» receives acknowledgements 9 of successfully transmitted packets to «UE». The sequence number of the next data packet expected to be acknowledged, BVT(A), is transmitted 6 to «SRNC» together with a stop-indication, according to the first embodiment of the invention. The status variable BVT(A) and the stop-indication are received by receive means «RR» of «SRNC». Processing means «μ» interprets data packets with sequence numbers in the range [BVT(A),VT(S)[ as negatively acknowledged and (re) transmits 10 these data packets to the new node «Node 2», where they are received by receive means «RN2» and buffered in «BuffN2».

According to the second embodiment there is no need for transmission of a stop-indication and time for emptying the buffer «BuffN1». Old node «Node 1» transmits 6 its status variables BVT(A) and BVT(S) at the time of handover to «SRNC». Processing means «μ» interprets the data packets in the range as negatively acknowledged and retransmits 10 the data packets to new node «Node 2». Prior to new node «Node 2», with transmit means «TN2», starts data transmissions 12 to user equipment «UE», having transmit means «TU» and receive means «RU», it updates its transmit buffer «BuffN2» according to current receive status VR(R) of «UE» as received 12.

Preferably, all retransmission entities, interconnecting networks or channels of different characteristics, e.g. RNCs and Nodes B in UMTS, operate according to the invention for outstanding performance. However, the invention can also be used in systems also including retransmission entities, such as Nodes B, not operating according to the invention.

A person skilled in the art readily understands that the receiver and transmitter properties of a BS or a UE are general in nature. The use of concepts such as BS, UE or RNC within this patent application is not intended to limit the invention only to devices associated with these acronyms. It concerns all devices operating correspondingly, or being obvious to adapt thereto by a person skilled in the art, in relation to the invention. As an explicit non-exclusive example the invention relates to mobile stations without a subscriber identity module, SIM, as well as user equipment including one or more SIMs. Further, protocols and layers are referred to in close relation with UMTS and Internet terminology. However, this does not exclude applicability of the invention in other systems with other protocols and layers of similar functionality. As a non-exclusive example, the invention applies for radio resource management interfacing of a connection protocol application layer as well as interfacing of a connection protocol transport layer, such as TCP.

The invention is not intended to be limited only to the embodiments described in detail above. Changes and modifications may be made without departing from the invention. It covers all modifications within the scope of the following claims.

## Claims

1. A method of operating a communication system, the communication system comprising a first transmitter (RNC L2 RCC), a logical node (Node B) and a user equipment (UE), the first transmitter having a connection with the logical node, the connection forming a first retransmission sub-loop, wherein the user equipment can establish a channel with the logical node, the channel, when established, forming a second retransmission sub-loop concatenated with the first retransmission sub-loop; the method **characterized in that,** in association with handover of said channel between the user equipment and the logical node, transferring signalling from the logical node to the first transmitter, the signalling carrying a status variable that indicates the sequence number of the next packet unit in a sequence of packet units transmitted to the user equipment expected to be acknowledged by the user equipment.

2. The method according to any of claims 1 **characterized in that** the logical node sends a stop-indication accompanying the status variable to the first transmitter.

3. The method according to either of claims 1 or 2, **characterized in that** the logical node sends a stop-indication when there are no more data packets for the user equipment pending at the logical node or a time-out timer has elapsed.

4. The method according to any of claims 1-3, **characterized in that** one or more data packets for the user equipment pending at the logical node are transmitted to the user equipment prior to transferring the signalling carrying the status variable.

5. The method according to any of claims 1-4, **characterized in that** the signalling carrying the status variable is not transferred until there are no more data packets for the user equipment pending at the logical node or a time-out timer has elapsed.

6. The method according to any of claims 1-5, **characterized in that** the first transmitter interprets the status variable as a negative acknowledgement of packet units ranging from the sequence number of the next packet unit expected to be acknowledged by the user equipment to the logical node up to the sequence number of the next packet unit to be transmitted for the first time from the first transmitter to the logical node.

7. The method according to claim 6, **characterized in**

**that** packet units considered negatively acknowledged are transmitted to a second logical node.

8. The method according to claim 1 **characterized in that** the method further comprises the step of transferring signalling from the logical node that carries a status variable indicating the sequence number of the next packet unit to be transmitted for the first time from the logical node.

9. The method according to claim 8, **characterized in that** the signalling carrying the status variables is transferred at handover of the channel between the logical node and the user equipment.

10. The method according to claim 8 or 9, **characterized in that** the first transmitter interprets the status variables as a negative acknowledgement of packet units ranging from the sequence number of the next packet unit expected to the acknowledged by the user equipment to the logical node up to the sequence number of the next packet unit to be transmitted for the first time from the logical node to the user equipment.

11. The method according to any of claims 8-10, **characterized in that** packet units considered negatively acknowledged are transmitted to a second logical node.

12. The method according to any of claims 8-11 **characterized in that** the user equipment transmits one or more signals carrying its receive status to a second logical node.

13. The method according to any of claims 8-12 **characterized in that** a second logical node updates its transmit status according to the receive status of the user equipment.

14. The method according to either of claims 12 or 13, **characterized in that** the receive status includes the sequence number of the next in-sequence packet unit expected to be received.

15. The method according to any of claims 1-14, **characterized in that** a connection is handed over from a channel between the logical node and the user equipment to a channel between a second logical node and the user equipment.

16. The method according to any of claims 1-15, **characterized in that** the channel is an HSDPA channel or an HS-DSCH.

17. The method according to any of claims 11-15, **characterized in that** the second logical node is a radio network controller, a Node B or a base station.

18. The method according to any of claims 1-17, **characterized in that** the logical node is a radio network controller, a Node B or a base station.

19. The method according to any of claims 1-18, **characterized in that** the first transmitter is a radio network controller.

20. The method according to any of claims 1-19, **characterized in that** the communications system is a universal mobile telecommunications system or a WCDMA system.

21. A network element (RNC L2 RLC) for use in a communications system, the communication system additionally comprising a logical node (Node B) and a user equipment (UE), the network element comprising a first transmitter having a connection with the logical node, the connection forming a first retransmission sub-loop; and wherein the user equipment can establish a channel with the logical node; the channel, when established, forming a second retransmission sub-loop concatenated with the first retransmission sub-loop;
the network element being **characterized by** receive means for, in association with the handover of said channel between the user equipment and logical node, receiving signalling carrying a status variable from the logical node the status variable indicating the sequence number of the next packet unit in a sequence of packet units transmitted to the user equipment expected to be acknowledged by the user equipment.

22. The network element according to claim 21, **characterized by** the receive means being further adapted to receive a stop-indication accompanying the status variable.

23. The network element according to claim 21 or 22, **characterized in that** the network element comprises processing means for interpreting reception of the status variable as a negative acknowledgement of packet units ranging from the sequence number indicated by the status variable up to the sequence number of the next packet unit to be transmitted for the first time from the network element to the logical node.

24. The network element according to claim 21, **characterized by** the receive means being further adapted to receive signalling carrying a status variable from the logical node, the status variable indicating the sequence number of the next packet unit to be transmitted for the first time from the logical node.

25. The network element according to claim 24, **characterized by** processing means for interpreting reception of the status variables as a negative acknowledgement of packet units within a range as indicated by the status variables.

26. The network element according to either of claims 23 or 25, **characterized by** transmit means for transmitting packet units considered negatively acknowledged to a second logical node.

27. The network element according to claim 26 **characterized in that** the second logical node is, or is included in, a radio network controller, a Node B or a base station.

28. The network element according to any of claims 21-27, **characterized in that** the communications system is a universal mobile telecommunications system or a WCDMA system.

29. The network element according to any of claims 21-28, **characterized in that** the channel is an HSDPA channel or an HS-DSCH.

30. The network element according to any of claims 21-29, **characterized in that** the first transmitter is, or is included in, a radio network controller.

31. The network element according to any of claims 21-30, **characterized in that** the logical node is, or is included in, a radio network controller.

32. The network element according to any of claims 21-31, **characterized in that** it is a radio network controller, a Node B or a base station.

33. A logical node (Node B) for use in a communications system, the communication system additionally comprising a first transmitter (RNC L2 RLC) and a user equipment (UE), the logical node having a connection with the first transmitter, the connection forming a first retransmission sub-loop; wherein the user equipment can establish a channel with the logical node, the channel, when established, forming a second retransmission sub-loop concatenated with the first retransmission sub-loop;
the logical node being **characterized by** transmit means for, in association with handover of said channel between the logical node and user equipment, transferring signalling carrying a status variable indicating the sequence number of the next packet unit in a sequence of packet units expected to be acknowledged by the user equipment to the first transmitter.

34. The logical node according to claim 33, **characterized by** the transmit means being further adapted for sending a stop-indication accompanying the status variable to the first transmitter.

35. The logical node according to either of claims 33 or 34, **characterized in that** the logical node sends a stop-indication when there are no more data packets for the user equipment pending at the logical node or a time-out timer has elapsed.

36. The logical node according to any of claims 33-35, **characterized by** a packet data transmit buffer.

37. The logical node according to any of claims 33-36, **characterized in that** one or more data packets to the user equipment pending at the logical node are transmitted to the user equipment prior to the signalling carrying the status variable is transferred.

38. The logical node according to any of claims 33-37 **characterized in that** the signalling carrying the status variable is not transferred until there are no more data packets for the user equipment pending at the logical node or a time-out timer has elapsed.

39. The logical node according to claim 33, **characterized by** the transmit means being further adapted for transferring signalling carrying a status variable indicating the sequence number of the next packet unit to be transmitted for the first time from the logical node.

40. The logical node according to any of claims 33-39, **characterized by** receive means for receiving signalling carrying user equipment receive status.

41. The logical node according to claim 40, **characterized by** circuitry for updating the logical node transmit status according to the receive status of the user equipment.

42. The logical node according to claim 40 or 41, **characterized in that** the receive status includes the sequence number of the next in-sequence packet unit expected to be received.

43. The logical node according to any of claims 33-42, **characterized in that** the channel is an HSDPA channel or an HS-DSCH.

44. The logical node according to any of claims 33-43, **characterized in that** the first transmitter is, or is included in, a radio network controller.

45. The logical node according to any of claims 33-44, **characterized in that** the logical node is, or is included in, a radio network controller.

46. The logical node according to any of claims 33-45, **characterized in that** it is a radio network controller, a Node B or a base station.

**47.** The logical node according to any of claims 33-46, **characterized in that** the communications system is a universal mobile telecommunications system or a WCDMA system.

**48.** A radio communications system **characterized by** at least one network element as claimed in claims 21-32.

**49.** A radio communications system **characterized by** at least one logical node as claimed in claims 33-47.

**Patentansprüche**

**1.** Verfahren zum Betreiben eines Kommunikationssystems,
wobei das Kommunikationssystem eine erste Übertragungseinheit (RNC L2 RLC), einen logischen Knoten (Node B) und ein Nutzergerät (UE) umfasst, die erste Übertragungseinheit eine Verbindung mit dem logischen Knoten aufweist, wobei die Verbindung eine erste Rückübertragungsunterschleife ausbildet, in der das Nutzergerät einen Kanal mit dem logischen Knoten einrichten kann, wobei der Kanal, wenn er eingerichtet ist, eine zweite mit der ersten Rückübertragungsunterschleife verknüpfte Rückübertragungsunterschleife ausbildet; wobei das Verfahren **dadurch gekennzeichnet ist, dass** in Verbindung mit einem Handover des Kanals zwischen dem Nutzergerät und dem logischen Knoten, das ein Signal von dem logischen Knoten an die erste Übertragungseinheit transferiert, das Signal eine Statusvariable trägt, die die Sequenznummer der nächsten Paketeinheit in einer Sequenz von an das Nutzergerät übertragenen Paketeinheiten trägt, von der erwartet wird, dass sie durch das Nutzergerät bestätigt wird.

**2.** Verfahren nach Anspruch 1, **dadurch gekennzeichnet, dass** der logische Knoten eine die Statusvariable begleitende Stopp-Indikation an die erste Übertragungseinheit sendet.

**3.** Verfahren nach entweder Anspruch 1 oder 2, **dadurch gekennzeichnet, dass** der logische Knoten eine Stopp-Indikation sendet, wenn keine weiteren Datenpakete für das Nutzergerät vorhanden sind, die an dem logischen Knoten anhängig sind, oder ein Timeout-Zeitnehmer abgelaufen ist.

**4.** Verfahren nach irgendeinem der Ansprüche 1 - 3, **dadurch gekennzeichnet, dass** ein oder mehrere Datenpakete für das Nutzergerät, die an dem logischen Knoten anhängig sind, vor dem Transfer des die Statusvariable tragenden Signals an das Nutzergerät übertragen werden.

**5.** Verfahren nach irgendeinem der Ansprüche 1 - 4, **dadurch gekennzeichnet, dass** das die Statusvariable tragende Signal nicht transferiert wird, bis keine weiteren Datenpakete für das Nutzergerät an dem logischen Knoten anhängig sind oder ein Timeout-Zeitnehmer abgelaufen ist.

**6.** Verfahren nach irgendeinem der Ansprüche 1 - 5, **dadurch gekennzeichnet, dass** die erste Übertragungseinheit die Statusvariable als eine negative Bestätigung von Paketeinheiten interpretiert, die von der Sequenznummer der nächsten Paketeinheit reichen, von der erwartet wird, dass sie von dem Nutzergerät bestätigt wird, bis zu der Sequenznummer der Paketeinheit, die zum ersten Mal von der ersten Übertragungseinheit an den logischen Knoten übertragen werden soll.

**7.** Verfahren nach Anspruch 6, **dadurch gekennzeichnet, dass** Paketeinheiten, die als negativ bestätigt angesehen werden, an einen zweiten logischen Knoten übertragen werden.

**8.** Verfahren nach Anspruch 1, **dadurch gekennzeichnet, dass** das Verfahren ferner den Schritt zum Übertragen eines Signals von dem ersten logischen Knoten umfasst, das eine Statusvariable trägt, das die Sequenznummer der nächsten Paketeinheit anzeigt, die zum ersten Mal von dem logischen Knoten übertragen werden soll.

**9.** Verfahren nach Anspruch 8, **dadurch gekennzeichnet, dass** das die Statusvariable tragende Signal beim Handover des Kanals zwischen dem logischen Knoten und dem Nutzergerät transferiert wird.

**10.** Verfahren nach Anspruch 8 oder 9, **dadurch gekennzeichnet, dass** die erste Übertragungseinheit die Statusvariable als eine negative Bestätigung von Paketeinheiten interpretiert, die von der Sequenznummer der nächsten Paketeinheit reichen, von der erwartet wird, dass sie durch das Nutzergerät bestätigt wird, bis zu der Sequenznummer der nächsten Paketeinheit, die zum ersten Mal von dem logischen Knoten an das Nutzergerät übertragen werden soll.

**11.** Verfahren nach irgendeinem der Ansprüche 8 - 10, **dadurch gekennzeichnet, dass** Pakteinheiten, die als negativ bestätigt angesehen werden, an einen zweiten logischen Knoten übertragen werden.

**12.** Verfahren nach irgendeinem der Ansprüche 8 - 11, **dadurch gekennzeichnet, dass** das Nutzergerät ein oder mehrere Signale, die ihren Empfangsstatus tragen, an einen zweiten logischen Knoten übertragen.

**13.** Verfahren nach irgendeinem der Ansprüche 8 - 12, **dadurch gekennzeichnet, dass** ein zweiter logischer Knoten seinen Übertragungsstatus gemäß dem Empfangsstatus des Nutzergeräts aktualisiert.

**14.** Verfahren nach entweder Anspruch 12 oder 13, **dadurch gekennzeichnet, dass** der Empfangsstatus die Sequenznummer der in der Sequenz nächsten Paketeinheit enthält, von der erwartet wird, dass sie empfangen wird.

**15.** Verfahren nach irgendeinem der Ansprüche 1 - 14, **dadurch gekennzeichnet, dass** eine Verbindung von einem Kanal zwischen dem logischen Knoten und dem Nutzergerät zu einem Kanal zwischen einem zweiten logischen Knoten und dem Nutzergerät übergeben wird.

**16.** Verfahren nach irgendeinem der Ansprüche 1 - 15, **dadurch gekennzeichnet, dass** der Kanal ein HSDPA-Kanal oder ein HS-DSCH ist.

**17.** Verfahren nach irgendeinem der Ansprüche 11 - 15, **dadurch gekennzeichnet, dass** der zweite logische Knoten eine Funknetzwerksteuereinheit, ein Knoten B oder eine Basisstation ist.

**18.** Verfahren nach irgendeinem der Ansprüche 1 - 17, **dadurch gekennzeichnet, dass** der logische Knoten eine Funknetzwerksteuereinheit, ein Knoten B oder eine Basisstation ist.

**19.** Verfahren nach irgendeinem der Ansprüche 1 - 18, **dadurch gekennzeichnet, dass** die erste Übertragungseinheit eine Funknetzwerksteuereinheit ist.

**20.** Verfahren nach irgendeinem der Ansprüche 1 - 19, **dadurch gekennzeichnet, dass** das Kommunikationssystem ein Universal-Mobiltelekommunikationssystem oder ein WCDMA-System ist.

**21.** Netzwerkelement (RNC L2 RLC) zur Verwendung in einem Kommunikationssystem, wobei das Kommunikationssystem zusätzlich einen logischen Knoten (Node B) und ein Nutzergerät (UE) umfasst, wobei das Netzwerkelement eine erste Übertragungseinheit umfasst, die eine Verbindung mit dem logischen Knoten aufweist, wobei die Verbindung eine erste Rückübertragungsunterschleife aufweist; und wobei das Nutzergerät einen Kanal mit dem logischen Knoten einrichten kann; wobei der Kanal, wenn er eingerichtet ist, eine zweite mit der ersten Rückübertragungsunterschleife verknüpfte Rückübertragungsunterschleife ausbildet; wobei das Netzwerkelement **gekennzeichnet ist durch** eine Empfangseinrichtung, in Verbindung mit dem Handover des Kanals zwischen dem Nutzergerät und dem logischen Knoten, zum Empfangen eines eine Statusvariable tragenden Signals von dem logischen Knoten, wobei die Statusvariable die Sequenznummer der nächsten Paketeinheit in einer Sequenz von Paketeinheit anzeigt, die an das Nutzergerät übertragen werden, von der erwartet wird, dass sie **durch** das Nutzergerät bestätigt wird.

**22.** Netzwerkelement nach Anspruch 21, **dadurch gekennzeichnet, dass** die Empfangseinrichtung ferner zum Empfangen einer Stopp-Indikation ausgelegt ist, die die Statusvariable begleitet.

**23.** Netzwerkelement nach Anspruch 21 oder 22, **dadurch gekennzeichnet, dass** das Netzwerkelement eine Verarbeitungseinheit umfasst zum Interpretieren des Empfangs der Statusvariable als eine negative Bestätigung von Paketeinheiten, die sich von der Sequenznummer, die durch die Statusvariable angezeigt wird, erstreckt bis zu der Sequenznummer der nächsten Paketeinheit, die zum ersten Mal von dem Netzwerkelement an den logischen Knoten übertragen werden soll.

**24.** Netzwerkelement nach Anspruch 21, **dadurch gekennzeichnet, dass** die Empfangseinrichtung ferner ausgelegt ist, ein Signal, das eine Statusvariable trägt, von dem logischen Knoten zu empfangen, wobei die Statusvariable die Sequenznummer der nächsten Paketeinheit anzeigt, die zum ersten Mal von dem logischen Knoten übertragen werden soll.

**25.** Netzwerkelement nach Anspruch 24, **gekennzeichnet durch** eine Verarbeitungseinrichtung zum Interpretieren des Empfangs der Statusvariable als eine negative Bestätigung von Paketeinheiten innerhalb eines **durch** die Statusvariable angezeigten Bereiches.

**26.** Netzwerkelement nach entweder Anspruch 23 oder 25, **gekennzeichnet durch** eine Übertragungseinrichtung zum Übertragen von Paketeinheiten, die als negativ bestätigt angesehen werden, an einen zweiten logischen Knoten.

**27.** Netzwerkelement nach Anspruch 26, **dadurch gekennzeichnet, dass** der zweite logische Knoten eine Funknetzwerksteuereinheit, ein Knoten B oder eine Basisstation, oder in einer enthalten ist.

**28.** Netzwerkelement nach irgendeinem der Ansprüche 21 - 27, **dadurch gekennzeichnet, dass** das Kommunikationssystem ein Universal-Mobiltelekommunikationssystem oder ein WCDMA-System ist.

**29.** Netzwerkelement nach irgendeinem der Ansprüche 21 - 28, **dadurch gekennzeichnet, dass** der Kanal ein HSDPA-Kanal oder ein HS-DSCH ist.

30. Netzwerkelement nach irgendeinem der Ansprüche 21 - 29, **dadurch gekennzeichnet, dass** die erste Übertragungseinheit eine Funknetzwerksteuereinheit ist, oder in einer enthalten ist.

31. Netzwerkelement nach irgendeinem der Ansprüche 21 - 30, **dadurch gekennzeichnet, dass** der logische Knoten eine Funknetzwerksteuereinheit ist, oder in einer enthalten ist.

32. Netzwerkelement nach irgendeinem der Ansprüche 21 - 31, **dadurch gekennzeichnet, dass** es eine Funknetzwerksteuereinheit, ein Knoten B oder eine Basisstation ist.

33. Logischer Knoten (Node B) zur Verwendung in einem Kommunikationssystem, das zusätzlich eine erste Übertragungseinheit (RNC L2 RLC) und ein Nutzergerät (UE) umfasst, wobei der logische Knoten eine Verbindung mit der ersten Übertragungseinheit aufweist, wobei die Verbindung eine erste Rückübertragungsunterschleife ausbildet; wobei das Nutzergerät einen Kanal mit dem logischen Knoten einrichten kann, wobei der Kanal, wenn er eingerichtet ist, eine zweite mit der ersten Rückübertragungsunterschleife verknüpfte Rückübertragungsunterschleife ausbildet; wobei der logische Knoten **gekennzeichnet ist durch** eine Übertragungseinrichtung, in Verbindung mit einem Handover des Kanals zwischen dem logischen Knoten und dem Nutzergerät, zum Transferieren eines Signals, das eine Statusvariable trägt, die die Sequenznummer der nächsten Paketeinheit in einer Sequenz von Paketeinheiten anzeigt, von denen erwartet wird, dass sie **durch** das Nutzergerät an die erste Übertragungseinheit bestätigt werden.

34. Logischer Knoten nach Anspruch 33, **dadurch gekennzeichnet, dass** die Übertragungseinrichtung ferner zum Senden einer die Statusvariable begleitenden Stopp-Indikation an die erste Übertragungseinheit ausgelegt ist.

35. Logischer Knoten nach entweder Anspruch 33 oder 34, **dadurch gekennzeichnet, dass** der logische Knoten eine Stopp-Indikation sendet, wenn keine weiteren Pakete für das Nutzergerät an dem logischen Knoten anhängig sind oder ein Timeout-Zeitnehmer abgelaufen ist.

36. Logischer Knoten nach irgendeinem der Ansprüche 33 - 35, **gekennzeichnet durch** einen Paket-Datenübertragungs-Puffer.

37. Logischer Knoten nach irgendeinem der Ansprüche 33 - 36, **dadurch gekennzeichnet, dass** ein oder mehrere Pakete an das Nutzergerät, die am logischen Knoten anhängig sind, an das Nutzergerät übertragen werden, bevor das die Statusvariable tragende Signal transferiert wird.

38. Logischer Knoten nach irgendeinem der Ansprüche 33 - 37, **dadurch gekennzeichnet, dass** das die Statusvariable tragende Signal nicht transferiert wird, bis keine weiteren Datenpaket für das Nutzergerät an dem logischen Knoten anhängig sind, oder ein Timeout-Zeitnehmer abgelaufen ist.

39. Logischer Knoten nach Anspruch 33, **dadurch gekennzeichnet, dass** die Übertragungseinrichtung ferner ausgelegt ist zum Transferieren des Signals, das eine Statusvariable trägt, die die Sequenznummer der nächsten Paketeinheit anzeigt, die zum ersten Mal von dem logischen Knoten übertragen werden soll.

40. Logischer Knoten nach irgendeinem der Ansprüche 33 - 39, **gekennzeichnet durch** eine Empfangseinrichtung zum Empfangen eines Signals, das einen Nutzergerät-Empfangsstatus trägt.

41. Logischer Knoten nach Anspruch 40, **gekennzeichnet durch** eine Schaltung zum Aktualisieren des Übertragungsstatus des logischen Knoten gemäß dem Empfangsstatus des Nutzergeräts.

42. Logischer Knoten nach Anspruch 40 oder 41, **dadurch gekennzeichnet, dass** der Empfangsstatus die Sequenznummer der in der Sequenz nächsten Paketeinheit enthält, von der erwartet wird, dass sie empfangen wird.

43. Logischer Knoten nach irgendeinem der Ansprüche 33 - 42, **dadurch gekennzeichnet, dass** der Kanal ein HSDPA-Kanal ist oder ein HS-DSCH.

44. Logischer Knoten nach irgendeinem der Ansprüche 33 - 43, **dadurch gekennzeichnet, dass** die erste Übertragungseinheit eine Funknetzwerksteuereinheit ist, oder darin enthalten ist.

45. Logischer Knoten nach irgendeinem der Ansprüche 33 - 44, **dadurch gekennzeichnet, dass** der logische Knoten eine Funknetzwerksteuereinheit ist, oder darin enthalten ist.

**46.** Logischer Knoten nach irgendeinem der Ansprüche 33 - 45, **dadurch gekennzeichnet, dass** er eine Funknetzwerksteuereinheit, ein Knoten B oder eine Basisstation ist.

**47.** Logischer Knoten nach irgendeinem der Ansprüche 33 - 46, **dadurch gekennzeichnet, dass** das Kommunikationssystem ein Universal-Mobiltelekommunikationssystem oder ein WCDMA-System ist.

**48.** Funkkommunikationssystem, **gekennzeichnet durch** zumindest ein Netzwerkelement nach den Ansprüchen 21 - 32.

**49.** Funkkommunikationssystem, **gekennzeichnet durch** zumindest einen logischen Knoten nach den Ansprüchen 33 - 47.

## Revendications

**1.** Procédé d'exploitation d'un système de communication, le système de communication comprenant un premier émetteur (RNC L2 RLC), un noeud logique (Noeud B) et un équipement d'utilisateur (UE), le premier émetteur ayant une connexion avec le noeud logique, la connexion formant une première boucle secondaire de ré-émission, dans lequel l'équipement d'utilisateur peut établir un canal vers le noeud logique, ce canal, après son établissement, formant une seconde boucle secondaire de ré-émission concaténée à la première boucle secondaire de ré-émission, le procédé étant **caractérisé**, en association avec le transfert dudit canal entre l'équipement d'utilisateur et le noeud logique, par le transfert d'une signalisation entre le noeud logique et le premier émetteur, la signalisation transportant une variable d'état qui indique le numéro d'ordre de la prochaine unité de paquet dans une séquence d'unités de paquets émises vers l'équipement d'utilisateur et dont il est attendu que l'équipement d'utilisateur en accuse réception.

**2.** Procédé selon la revendication 1, **caractérisé en ce que** le noeud logique envoie une indication d'arrêt accompagnant la variable d'état vers le premier émetteur.

**3.** Procédé selon la revendication 1 ou 2, **caractérisé en ce que** le noeud logique émet une indication d'arrêt lorsqu'il n'y a plus de paquets de données destinés à l'équipement d'utilisateur qui attendent sur le noeud logique ou lorsqu'un compteur de temporisation a expiré.

**4.** Procédé selon l'une quelconque des revendications 1 à 3, **caractérisé en ce qu'**un ou plusieurs paquets de données destinés à l'équipement d'utilisateur qui attendent sur le noeud logique sont émis vers l'équipement d'utilisateur avant de transférer la signalisation transportant la variable d'état.

**5.** Procédé selon l'une quelconque des revendications 1 à 4, **caractérisé en ce que** la signalisation transportant la variable d'état n'est pas transférée avant qu'il n'y ait plus de paquets de données destinés à l'équipement d'utilisateur qui attendent sur le noeud logique ou avant qu'un compteur de temporisation n'ait expiré.

**6.** Procédé selon l'une quelconque des revendications 1 à 5, **caractérisé en ce que** le premier émetteur interprète la variable d'état comme un accusé de réception négatif d'unités de paquets allant du numéro d'ordre de la prochaine unité de paquet dont il est attendu que l'équipement d'utilisateur en accuse réception au noeud logique et jusqu'au numéro d'ordre de la prochaine unité de paquet à émettre pour la première fois entre le premier émetteur et le noeud logique.

**7.** Procédé selon la revendication 6, **caractérisé en ce que** des unités de paquets considérées comme ayant fait l'objet d'un accusé de réception négatif sont émises vers un second noeud logique.

**8.** Procédé selon la revendication 1, **caractérisé en ce que** le procédé comprend en outre l'étape consistant à émettre à partir du noeud logique de la signalisation qui transporte une variable d'état indiquant le numéro d'ordre de la prochaine unité de paquet à émettre pour la première fois à partir du noeud logique.

**9.** Procédé selon la revendication 8, **caractérisé en ce que** la signalisation transportant les variables d'état est transférée lors du transfert du canal entre le noeud logique et l'équipement d'utilisateur.

**10.** Procédé selon la revendication 8 ou 9, **caractérisé en ce que** le premier émetteur interprète les variables d'état comme un accusé de réception négatif d'unités de paquets allant du numéro d'ordre de la prochaine unité de paquet dont il est attendu que l'équipement d'utilisateur en accuse réception au noeud logique et jusqu'au numéro d'ordre de la prochaine unité de paquet à émettre pour la première fois entre le premier émetteur et le noeud logique.

**11.** Procédé selon l'une quelconque des revendications 8 à 10, **caractérisé en ce que** des unités de paquets considérées comme ayant fait l'objet d'un accusé de réception négatif sont émises vers un second noeud logique.

**12.** Procédé selon l'une quelconque des revendications 8 à 11, **caractérisé en ce que** l'équipement d'utilisateur émet un ou plusieurs signaux transportant son état de réception vers un second noeud logique.

**13.** Procédé selon l'une quelconque des revendications 8 à 12, **caractérisé en ce qu'**un second noeud logique met à jour son état d'émission en fonction de l'état de réception de l'équipement d'utilisateur.

**14.** Procédé selon la revendication 12 ou 13, **caractérisé en ce que** l'état de réception comprend le numéro d'ordre de l'unité suivante de paquet, dans l'ordre, dont la réception est attendue.

**15.** Procédé selon l'une quelconque des revendications 1 à 14, **caractérisé en ce qu'**une connexion est transférée entre un canal établi entre le noeud logique et l'équipement d'utilisateur et un canal établi entre un second noeud logique et l'équipement d'utilisateur.

**16.** Procédé selon l'une quelconque des revendications 1 à 15, **caractérisé en ce que** le canal est un canal HSDPA ou un canal HS-DSCH.

**17.** Procédé selon l'une quelconque des revendications 11 à 15, **caractérisé en ce que** le second noeud logique est un contrôleur de réseau radio, un noeud B ou une station de base.

**18.** Procédé selon l'une quelconque des revendications 1 à 17, **caractérisé en ce que** le noeud logique est un contrôleur de réseau radio, un noeud B ou une station de base.

**19.** Procédé selon l'une quelconque des revendications 1 à 18, **caractérisé en ce que** le premier émetteur est un contrôleur de réseau radio.

**20.** Procédé selon l'une quelconque des revendications 1 à 19, **caractérisé en ce que** le système de communication est un système UMTS (*pour « Universal Mobile Telecommunications System »* - Système universel de télécommunication mobile) ou WCDMA (pour « *Wideband Code Division Multiple Access* » - Accès multiple à répartition par code, en large bande).

**21.** Élément de réseau (RNC L2 RLC) destiné à être utilisé dans un système de communication, le système de communication comprenant en outre un noeud logique (Noeud B) et un équipement utilisateur (UE), l'élément de réseau comprenant un premier émetteur ayant une connexion avec le noeud logique, la connexion formant une première boucle secondaire de ré-émission, dans lequel l'équipement d'utilisateur peut établir un canal vers le noeud logique, ce canal, après son établissement, formant une seconde boucle secondaire de ré-émission concaténée à la première boucle secondaire de ré-émission,

l'élément de réseau étant **caractérisé par** un moyen de réception destiné, en association avec le transfert dudit canal entre l'équipement d'utilisateur et le noeud logique, à recevoir une signalisation transportant une variable d'état à partir du noeud logique, la variable d'état indiquant le numéro d'ordre de la prochaine unité de paquet, dans une séquence d'unités de paquets émises vers l'équipement d'utilisateur, dont il est attendu que l'équipement d'utilisateur en accuse réception.

**22.** Élément de réseau selon la revendication 21, **caractérisé en ce que** le moyen de réception est en outre conçu pour recevoir une indication d'arrêt accompagnant la variable d'état.

**23.** Élément de réseau selon la revendication 21 ou 22, **caractérisé en ce que** l'élément de réseau comprend un moyen de traitement destiné à interpréter la réception de la variable d'état comme un accusé de réception négatif d'unités de paquets allant du numéro d'ordre indiqué par la variable d'état jusqu'au numéro d'ordre de la prochaine unité de paquet à émettre pour la première fois entre le premier émetteur et le noeud logique.

**24.** Élément de réseau selon la revendication 21, **caractérisé en ce que** le moyen de réception est en outre conçu pour recevoir du noeud logique une signalisation transportant une variable d'état, la variable d'état indiquant le numéro d'ordre de la prochaine unité de paquet à émettre pour la première fois à partir du noeud logique.

**25.** Élément de réseau selon la revendication 24, **caractérisé par** un moyen de traitement destiné à interpréter la réception des variables d'état comme un accusé de réception négatif d'unités de paquets se situant dans une plage indiquée par les variables d'état.

**26.** Élément de réseau selon la revendication 23 ou 25, **caractérisé par** un moyen d'émission destiné à émettre vers un second noeud logique des unités de paquets dont on considère qu'elles ont fait l'objet d'un accusé de réception négatif.

**27.** Élément de réseau selon la revendication 26, **caractérisé en ce que** le second noeud logique constitue un contrôleur de réseau radio, un noeud B ou une station de base ou bien est inclus dans celui-ci.

**28.** Élément de réseau selon l'une quelconque des revendications 21 à 27, **caractérisé en ce que** le système de communication est un système UMTS (pour « *Universal Mobile Telecommunications System* » - Système universel de télécommunication mobile) ou WCDMA (pour « *Wideband Code Division Multiple Access* » - Accès multiple à répartition par code, en large bande).

29. Élément de réseau selon l'une quelconque des revendications 21 à 28, **caractérisé en ce que** le canal est un canal HSDPA ou un canal HS-DSCH.

30. Élément de réseau selon l'une quelconque des revendications 21 à 29, **caractérisé en ce que** le premier émetteur constitue un contrôleur de réseau radio ou est inclus dans celui-ci.

31. Élément de réseau selon l'une quelconque des revendications 21 à 30, **caractérisé en ce que** le noeud logique constitue un contrôleur de réseau radio ou est inclus dans celui-ci.

32. Élément de réseau selon l'une quelconque des revendications 21 à 31, **caractérisé en ce qu'**il constitue un contrôleur de réseau radio, un noeud B ou une station de base.

33. Noeud logique (Noeud B) destiné à être utilisé dans un système de communication, le système de communication comprenant en outre un premier émetteur (RNC L2 RLC) et un équipement utilisateur (UE), le noeud logique ayant une connexion avec le premier émetteur, la connexion formant une première boucle secondaire de ré-émission, dans lequel l'équipement d'utilisateur peut établir un canal vers le noeud logique, ce canal, après son établissement, formant une seconde boucle secondaire de ré-émission concaténée à la première boucle secondaire de ré-émission,
le noeud logique étant **caractérisé par** un moyen d'émission destiné, en association avec le transfert dudit canal entre le noeud logique et l'équipement d'utilisateur, à transférer une signalisation transportant une variable d'état à partir du noeud logique, la variable d'état indiquant le numéro d'ordre de la prochaine unité de paquet, dans une séquence d'unités de paquets, dont il est attendu que l'équipement d'utilisateur en accuse réception au premier émetteur.

34. Noeud logique selon la revendication 33, **caractérisé en ce que** le moyen d'émission est en outre conçu pour émettre vers le premier émetteur une indication d'arrêt accompagnant la variable d'état.

35. Noeud logique selon la revendication 33 ou 34, **caractérisé en ce que** le noeud logique envoie une indication d'arrêt lorsqu'il n'y a plus de paquets de données destinés à l'équipement d'utilisateur qui attendent sur le noeud logique ou lorsqu'un compteur de temporisation a expiré.

36. Noeud logique selon l'une quelconque des revendications 33 à 35, **caractérisé par** un tampon d'émission de données en paquets.

37. Noeud logique selon l'une quelconque des revendications 33 à 36, **caractérisé en ce qu'**un ou plusieurs paquets de données destinés à l'équipement d'utilisateur qui attendent sur le noeud logique sont émis vers l'équipement d'utilisateur avant de transférer la signalisation transportant la variable d'état.

38. Noeud logique selon l'une quelconque des revendications 33 à 37, **caractérisé en ce que** la signalisation transportant la variable d'état n'est pas transférée avant qu'il n'y ait plus de paquets de données destinés à l'équipement d'utilisateur qui attendent sur le noeud logique ou avant qu'un compteur de temporisation n'ait expiré.

39. Noeud logique selon la revendication 33, **caractérisé en ce que** le moyen d'émission est en outre conçu pour émettre de la signalisation qui transporte une variable d'état indiquant le numéro d'ordre de la prochaine unité de paquet à émettre pour la première fois à partir du noeud logique.

40. Noeud logique selon l'une quelconque des revendications 33 à 39, **caractérisé par** un moyen de réception destiné à recevoir la signalisation transportant l'état de réception de l'équipement d'utilisateur.

41. Noeud logique selon la revendication 40, **caractérisé par** un ensemble de circuits destinés à mettre à jour l'état d'émission du noeud logique en fonction de l'état de réception de l'équipement d'utilisateur.

42. Noeud logique selon la revendication 40 ou 41, **caractérisé en ce que** l'état de réception inclut le numéro d'ordre de la prochaine unité de paquet dans l'ordre dont la réception est attendue.

43. Noeud logique selon l'une quelconque des revendications 33 à 42, **caractérisé en ce que** le canal est un canal HSDPA ou un canal HS-DSCH.

44. Noeud logique selon l'une quelconque des revendications 33 à 42, **caractérisé en ce que** le premier émetteur constitue un contrôleur de réseau radio ou est inclus dans celui-ci.

45. Noeud logique selon l'une quelconque des revendications 33 à 44, **caractérisé en ce que** le noeud logique constitue un contrôleur de réseau radio ou est inclus dans celui-ci.

**46.** Noeud logique selon l'une quelconque des revendications 33 à 45, **caractérisé en ce qu'**il constitue un contrôleur de réseau radio, un noeud B ou une station de base.

**47.** Noeud logique selon l'une quelconque des revendications 33 à 46, **caractérisé en ce que** le système de communication est un système UMTS (pour « *Universal Mobile Telecommunications System* » - Système universel de télécommunication mobile) ou WCDMA (pour « *Wideband Code Division Multiple Access* » - Accès multiple à répartition par code, en large bande).

**48.** Système de communication radio **caractérisé par** au moins un élément de réseau selon les revendications 21 à 32.

**49.** Système de communication radio **caractérisé par** au moins un noeud logique selon les revendications 33 à 47.

**Fig. 1**

**Fig. 2**

| L2/PDCP | | L2/PDCP | **RNC** |
|---|---|---|---|
| L2/BMC | | L2/BMC | |
| Data Link L2/RLC | Logical | Data Link L2/RLC | |
| Data Link L2/MAC | Transport | Data Link L2/MAC | |

| L2/MAC-HSDPA | Transport | L2/MAC-HSDPA | **Node B** |
|---|---|---|---|
| Physical L1 | | Physical L1 | |

Physical

**UE**            Radio/Uu            **UTRAN**

# Fig. 3

*Fig. 4*

*Fig. 5a*

*Fig. 5b*

UE

ARQ sU

MAC

PDU

uplink

downlink

PDU

Iub

ARQ Su

Buff Sb

MAC -d

Iur

Iub

Buff sB

MAC-hs

BS 1/ Node B 1

CRNC 1/ SRNC

CRNC 2/ DRNC

BS 2/ Node B 2

*Fig. 6*

**UE**

ARQ sU

MAC

PDU

*uplink*

*downlink*

PDU

lub

ARQ Su

Buff Sd

MAC -d

lur

Buff sD

MAC-hs

lub

**BS 1/**
**Node B 1**

**CRNC 1/**
**SRNC**

**CRNC 2/**
**DRNC**

**BS 2/**
**Node B 2**

*Fig. 7*

START

RNC stops trans-
mitting data to-
wards old Node B

Old Node B starts
time-out timer $t_{HO}$

$t < t_{HO}$ — No / Yes

Data pending in old Node B — No / Yes

Old Node B trans-
mits pending data

Old Node B trans-
mits stop-indication
and status to RNC

RNC (re)transmits
RLC PDUs in range
[BVT(A),VT(S)[ to
new Node B

STOP

**Fig. 8**

START

RNC stops trans-
mitting data to-
wards old Node B.

Optionally, old
Node B transmits
status to RNC.

RNC (re)transmits
RLC PDUs in range
[BVT(A),BVT(S)] to
new Node B.

UE transmits its
receive status to
new Node B.

Transmit status of
new Node B is
updated.

STOP

**Fig. 9**

**Fig. 10**

EP 1 461 889 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5570367 A
- US 6118765 A

- WO 0021231 A
- SE 01007392

### Non-patent literature cited in the description

- Radio Access to an ATM Network with a TDD/TDMA-OFDM System. *Vehicular Technology Conference,* 1997, vol. 3, 1654-1658